# EUROPEAN PATENT APPLICATION

(11) **EP 4 628 340 A1**
(43) Date of publication of application: **08.10.2025**
(21) Application number: 25160260.3
(22) Date of filing: 26.02.2025
(51) Int. Cl.: B60K 35/10, B60K 35/22, B60K 35/28, B60K 35/29, B60K 35/81, B60W 30/18, B60W 50/14, G08G 1/16

(54) **ONBOARD DEVICE, AND COMPUTER-READABLE MEDIUM STORING ONBOARD CONTROL PROGRAM**

(30) Priority: 12.03.2024 JP 2024038209
(71) Applicant: TOYOTA JIDOSHA KABUSHIKI KAISHA, Toyota-shi, Aichi-ken, 471-8571 (JP)
(72) Inventor: TSUJINO, Miki, TOYOTA-SHI, AICHI-KEN, 471-8571 (JP)
(74) Representative: Cabinet Beau de Loménie

(57) **Abstract**

An onboard device including: a display control section that, based on a detection result of a detection section for detecting targets at a periphery of a vehicle, displays an ego vehicle image depicting the vehicle together with a peripheral monitoring image on a display provided to the vehicle; a reception section that receives an operation of an occupant of the vehicle on the display; and an execution section that executes a predetermined processing related to a function of the vehicle at each section of the vehicle according to the operation received by the reception section.

## Description

### BACKGROUND

### Technical Field

The present disclosure relates to an onboard device, and a computer-readable medium storing an onboard control program.

### Related Art

Japanese Patent No. 7048398, discloses displaying a first image imitating an other-vehicle and a second image imitating a target track so as to be superimposed on a third image imitating a road the ego vehicle (i.e., own vehicle) is traveling on. When displaying the second image, from out of plural segments segmenting the target track along its length direction, a first segment is displayed with greater emphasis than a second segment, with the first segment being at the near side of a reference vehicle referenced when generating the target track as seen from the ego vehicle, and the second segment being at the far side of the reference vehicle when viewed from the ego vehicle.

In a peripheral monitoring display such as in Japanese Patent No. 7048398, a target such as another vehicle at the periphery is displayed. However, an operation on a function of the ego vehicle, such as a driver assistance function or the like, is not able to be associated with the peripheral monitoring display. In particular, operating is complicated with different devices and different methods for each of the plural vehicle functions, and there is room for improvement regarding operability.

### SUMMARY

The present disclosure provides an onboard device, and a computer-readable medium storing an onboard control program, that may improve operability for an occupant for vehicle functions.

An onboard device according to a first aspect includes: a display control section that, based on a detection result of a detection section for detecting targets at a periphery of a vehicle, displays an ego vehicle image depicting the vehicle together with a peripheral monitoring image on a display provided to the vehicle; a reception section that receives an operation of an occupant of the vehicle on the display; and an execution section that executes a predetermined processing related to a function of the vehicle at each section of the vehicle according to the operation received by the reception section.

In the first aspect, the display control section displays the ego vehicle image depicting the ego vehicle, together with the peripheral monitoring image on the display provided to the vehicle, based on the detection results of the detection section for detecting targets at a periphery of the vehicle.

Then the predetermined operation of the occupant of the vehicle on the display is received by the reception section, and the predetermined processing related to a function of the vehicle is performed in the execution section according to the operation received by the reception section. This thereby enables an operation on a function of the ego vehicle, such as a driver assistance function or the like, to be executed on the peripheral monitoring display, enabling operability for the occupant for vehicle functions to be improved.

In a second aspect of the present disclosure, in the first aspect, the execution section may perform part or all of at least one out of a vehicle operation or an operation assist as the predetermined processing, so as to execute a driver assistance function or an autonomous driving function.

The second aspect may enable a driver assistance function or an autonomous driving function to be executed on the peripheral monitoring display.

In a third aspect of the present disclosure, in the first aspect or the second aspect, the execution section may perform part or all of at least one out of a vehicle operation or an operation assist as the predetermined processing, so as to change a setting of a driver assistance function or an autonomous driving function.

The third aspect may enable a setting such as ON/OFF of a driver assistance function or an autonomous driving function to be changed on the peripheral monitoring display.

In a fourth aspect of the present disclosure, in the first aspect to the third aspect, the execution section may execute a leading vehicle following function as the predetermined processing, when a touch operation to the ego vehicle image has been received by the reception section.

The fourth aspect may enable operation of the leading vehicle following function on the peripheral monitoring display.

In a fifth aspect of the present disclosure, in the first aspect to the fourth aspect, the execution section may execute control of acceleration or deceleration of the vehicle as the predetermined processing, when a slide operation of the ego vehicle image has been received by the reception section in a progression direction or a rearward direction.

The fifth aspect may enable instruction of acceleration or deceleration of a vehicle to be intuitively operated on the peripheral monitoring display.

In a sixth aspect of the present disclosure, in the first aspect to the fifth aspect, the execution section may execute a lane change assistance function in a right direction or a left direction as the predetermined processing, when a slide operation of the ego vehicle image has been received by the reception section in a right direction or a left direction.

The sixth aspect may enables intuitive operation of the lane change assistance function on the peripheral monitoring display.

In a seventh aspect of the present disclosure, in the first aspect to the sixth aspect, the execution section may change a setting of a lane deviation prevention function as the predetermined processing, when a touch operation to an image of a vehicle lane boundary line has been received by the reception section.

The seventh aspect may enable a setting such as ON/OFF or the like of the lane deviation prevention function to be changed on the peripheral monitoring display.

In an eighth aspect of the present disclosure, in the first aspect to the seventh aspect, the execution section may change a setting of an automatic headlight control function as the predetermined processing, when a touch operation to a front end of the ego vehicle image has been received by the reception section.

The eighth aspect may enable a setting such as ON/OFF or the like of the automatic headlight control function to be changed on the peripheral monitoring display.

In a ninth aspect of the present disclosure, in the first aspect to the eighth aspect, the execution section may adjust an inter-vehicle distance as the predetermined processing when, during operation of a leading vehicle following function, a slide operation to the ego vehicle image or to a leading vehicle image depicting a leading vehicle in front of the vehicle, or a slide operation to an inter-vehicle spacing image to represent an inter-vehicle distance between the vehicle and the leading vehicle, has been received by the reception section.

The ninth aspect may enable an inter-vehicle distance to be specified on the peripheral monitoring display during operation of the leading vehicle following function.

In a tenth aspect of the present disclosure, in the first aspect to the ninth aspect, the execution section may execute overtaking of a leading vehicle as the predetermined processing, when a slide operation of a trajectory to overtake a leading vehicle image depicting a leading vehicle in front of the vehicle has been received by the reception section.

The tenth aspect may enable an instruction to overtake the leading vehicle to be intuitively operated on the peripheral monitoring display.

In an eleventh aspect of the present disclosure, in the first aspect to the tenth aspect, the execution section may perform enlargement or contraction on an image being displayed on the display, according to a pinch operation to the display as the predetermined processing, when the pinch operation has been received by the reception section.

The eleventh aspect may enable an area enlargement or contraction operation to be intuitively operated on the peripheral monitoring display.

In a twelfth aspect of the present disclosure, in the first aspect to the eleventh aspect, the execution section may enlarge display of an image being displayed on the display as the predetermined processing, when the reception section has received a touch operation once to the ego vehicle image, or a touch operation of at least a predetermined duration or a touch operation twice within a predetermined period of time to the display.

The twelfth aspect may enable an operation to enlarge display to be performed easily on the peripheral monitoring display.

In a thirteenth aspect of the present disclosure, in the first aspect to the twelfth aspect, the execution section may rotate the peripheral monitoring image being displayed on the display as the predetermined processing, when a touch operation of rotation on the display has been received by the reception section.

The thirteenth aspect may enable an instruction to rotate the peripheral monitoring image being displayed to be performed easily on the peripheral monitoring display.

In a fourteenth aspect of the present disclosure, in the first aspect to the thirteenth aspect, the execution section may change an angle of view of an image displayed on the display as the predetermined processing, when a touch operation at plural locations on the display has been received by the reception section.

The fourteenth aspect may enable the angle of view of an image being displayed to be changed on the peripheral monitoring display.

In a fifteenth aspect of the present disclosure, in the first aspect to the fourteenth aspect, when the reception section has received a touch operation to a peripheral vehicle image representing a vehicle at the periphery of the vehicle during operation of a leading vehicle following function, the execution section may set the peripheral vehicle corresponding to the touch operation as a leading vehicle for the vehicle to follow as the predetermined processing.

The fifteenth aspect may enable a leading vehicle to follow to be set on the peripheral monitoring display.

In a sixteenth aspect of the present disclosure, in the first aspect to the fifteenth aspect, when a touch operation to the ego vehicle image has been received while a shift position of the vehicle is in a parking position, the execution section may display a customize screen to customize a predetermined function of the vehicle as the predetermined processing.

A sixteenth aspect may enable a transition to a customize screen to be instructed on the peripheral monitoring display.

In a seventeenth aspect of the present disclosure, in the first aspect to the sixteenth aspect, when the reception section has received a touch operation to the display during operation of a parking assist function of the vehicle, the execution section may set a position corresponding to the touch operation as a parking position of the vehicle in the parking assist function as the predetermined processing.

The seventeenth aspect may enable a parking position of a vehicle in a parking assist function to be specified on the peripheral monitoring display.

An eighteenth aspect of the present disclosure is a computer-readable medium storing an onboard control program that causes a computer to execute processing, the processing including: based on a detection result of a detection section for detecting targets at a periphery of a vehicle, displaying an ego vehicle image depicting the vehicle together with a peripheral monitoring image on a display provided to the vehicle, receiving an operation of an occupant of the vehicle on the display, and executing a predetermined processing related to a function of the vehicle at each section of the vehicle according to the received operation.

The eighteenth aspect may enable provision of an onboard device and an onboard control program capable of improving operability for an occupant to vehicle functions by enabling operation on functions of the ego vehicle, such as a driver assistance function or the like, to be executed on the peripheral monitoring display.

According to the above aspects, an onboard device and a computer-readable medium storing an onboard control program of the present disclosure enable an improvement in operability for an occupant on vehicle functions.

### BRIEF DESCRIPTION OF THE DRAWINGS

Exemplary embodiments will be described in detail based on the following figures, wherein:
Fig. 1 is a schematic diagram of the interior of a cabin of a vehicle installed with an onboard device according to the present exemplary embodiment;
Fig. 2 is a block diagram illustrating a configuration of a control system of an onboard device according to the present exemplary embodiment;
Fig. 3 is a block diagram illustrating relevant configuration of an electrical system of a meter ECU, a multimedia ECU, and an advanced driver assistance ECU in an onboard device according to the present exemplary embodiment;
Fig. 4 is a diagram illustrating an example of a peripheral monitoring display;
Fig. 5 is a diagram illustrating another example of a peripheral monitoring display;
Fig. 6 is a functional block diagram illustrating a functional configuration of a multimedia ECU;
Fig. 7 is a diagram to explain an example of predetermined processing performed in an execution section of a multimedia ECU of an onboard device according to the present exemplary embodiment;
Fig. 8 is a flowchart illustrating an example of a flow of processing performed in a multimedia ECU of an onboard device according to the present exemplary embodiment;
Fig. 9 is a diagram illustrating a manner of slide operation on an ego vehicle image;
Fig. 10 is a diagram illustrating a manner of a touch operation on a vehicle lane boundary line such as a white line or the like;
Fig. 11 is a diagram illustrating a manner of a touch operation on a front end of an ego vehicle image;
Fig. 12 is a flowchart illustrating an example of a flow of a modified example of processing performed in a multimedia ECU of an onboard device according to the present exemplary embodiment;
Fig. 13 is a diagram illustrating a manner of slide operation of a trajectory to overtake a leading vehicle image on an ego vehicle image;
Fig. 14 is a diagram illustrating a manner of slide operation on an inter-vehicle spacing image representing a vehicle separation to a leading vehicle;
Fig. 15 is a diagram illustrating an example of processing corresponding to an operation when another operation example is received at a peripheral monitoring display in an onboard device according to the present exemplary embodiment;
Fig. 16 is a diagram illustrating examples of conditional operations received at a peripheral monitoring display, and examples of processing corresponding to the operations, in an onboard device according to the present exemplary embodiment.

### DETAILED DESCRIPTION

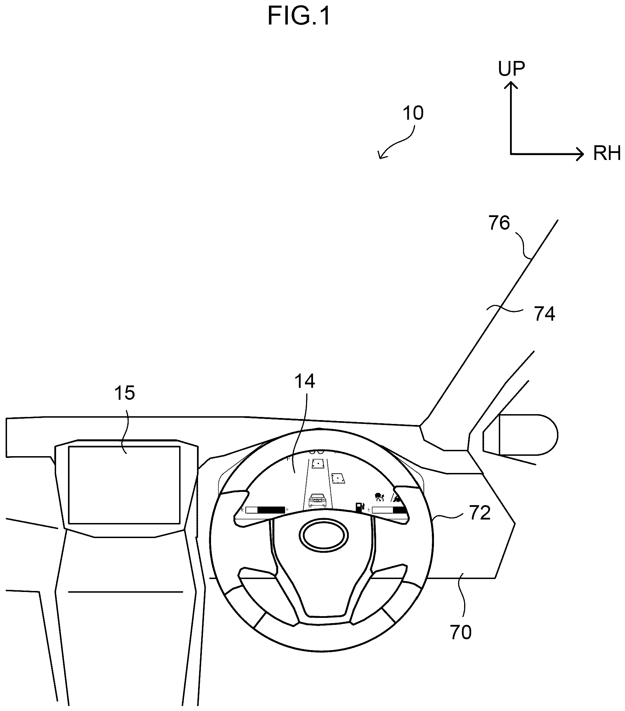

Detailed description follows regarding an example of an exemplary embodiment of the present disclosure, with reference to the drawings. Fig. 1 is a schematic diagram of the interior of a cabin of a vehicle installed with an onboard device according to the present exemplary embodiment. Note that the arrow UP in Fig. 1 indicates an upward side in a vehicle height direction, and the arrow RH indicates a right side in a vehicle width direction. Up and down directions and left and right directions in the following description respectively mean up and down in the vehicle height direction, and left and right in the vehicle width direction.

As illustrated in Fig. 1, an instrument panel 70 is provided at a front portion of the cabin interior of a vehicle 10. A windshield glass 74 is provided at a front end portion of the instrument panel 70. The windshield glass 74 extends in both the vehicle height direction and the vehicle width direction, and partitions between the cabin interior and the cabin exterior.

A vehicle right side end portion of the windshield glass 74 is fixed to a vehicle right side front pillar 76. The front pillar 76 extends along the vehicle height direction, and the windshield glass 74 is fixed to a vehicle width direction inside end portion of the front pillar 76. Note that a vehicle left side end portion of the windshield glass 74 is fixed to a non-illustrated vehicle left side front pillar.

The instrument panel 70 extends along the vehicle width direction, and a steering wheel 72 is provided at a vehicle right side of the instrument panel 70. Namely, the present exemplary embodiment is, as an example, a right-hand drive vehicle with the steering wheel 72 provided at the right side, and a driver seat installed at the vehicle right side.

A display 14 serving as an example of a display is provided at a position corresponding to in front of the steering wheel 72 of the instrument panel 70, and a multimedia display 15 serving as another example of a display is provided at a central portion of the instrument panel 70. The display 14 and the multimedia display 15 are, as an example, each configured by a liquid crystal touch panel, and as well as displaying a travel state of the vehicle and an operational situation of a driver assistance device or the like, also receive touch operations.

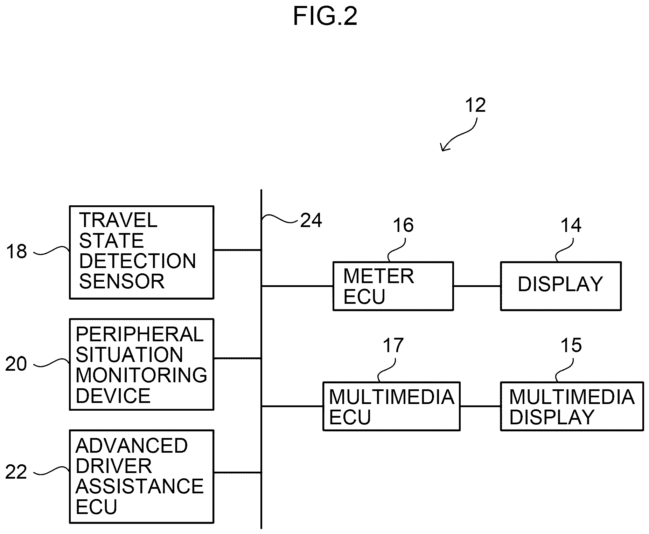

Next, description follows regarding a configuration of a control system of an onboard device 12 according to the present exemplary embodiment. Fig. 2 is a block diagram illustrating a configuration of a control system of the onboard device 12 according to the present exemplary embodiment.

The onboard device 12 according to the present exemplary embodiment includes a meter electronic control unit (ECU) 16, a multimedia ECU 17, a travel state detection sensor 18, a peripheral situation monitoring device 20 serving as an example of a detection section, an advanced driver assistance ECU 22, and the like, with each of these connected to a vehicle network 24.

The meter ECU 16 is connected to the display 14, controls the display 14, and performs processing to display plural meters, processing to display various information of the vehicle, such as vehicle periphery monitoring results and the like. In cases in which an abnormality or the like has occurred in the vehicle, the meter ECU 16 notifies an occupant by displaying that an abnormality has occurred on the display 14. Examples of the various information of the vehicle for displaying on the display 14 include an operational status of a driver assistance device or the like. A display mode of the display 14 is switchable using a non-illustrated switch or the like, and is changeable to a display mode according to the preferences of the driver.

The multimedia ECU 17 is connected to the multimedia display 15, controls the multimedia display 15, and performs processing to display the vehicle periphery monitoring results, and information such a map image, and a setting screen for various functions of the vehicle, and the like.

The travel state detection sensor 18 detects a travel state of the vehicle 10. The travel state detection sensor 18 may, for example, include at least one sensor out of various sensors such as a vehicle speed sensor, an accelerometer, a gyro sensor, an accelerator position sensor, a brake sensor, and the like.

The peripheral situation monitoring device 20 detects information representing what type of situation there is, such as a peripheral environment of the ego vehicle or the like. For example, the peripheral situation monitoring device 20 may include at least one device from out of various devices such as a global positioning system (GPS) device, an onboard communication unit, a navigation system, a radar device, an ultrasonic sensor, a camera, or the like.

The advanced driver assistance ECU 22 includes functions to acquire peripheral information detected by the peripheral situation monitoring device 20 for monitoring the periphery, to provide the peripheral information to other ECUs, and to control steering and braking as necessary. The advanced driver assistance ECU 22, for example, performs processing to control braking and assist deceleration, such as when release of the accelerator has been detected by the travel state detection sensor 18, and when a leading vehicle, an intersection, or the like has been detected by the peripheral situation monitoring device 20. Specifically, the advanced driver assistance ECU 22 performs control of various driver assistance functions, such as an adaptive cruise control function as an example of a leading vehicle following function to control acceleration and deceleration in following travel to match changes in vehicle speed of the leading vehicle, a lane tracing assistance function to warn when a possibility arises of deviating from a vehicle lane or travel path and to assist part of a steering operation to avoid deviating from a vehicle lane or travel path, and a lane change assistance function serving as an example of a lane change assistance function to assist part of a steering operation needed to change vehicle lane. Note that a leading vehicle following function is not limited to being an adaptive cruise control function, and may be another leading vehicle following function. Moreover, the vehicle lane change function is also not limited to being a lane change assistance function, and may be another vehicle lane change function. Furthermore, the driver assistance function is not limited to the above, and may be applied to various other driver assistance functions.

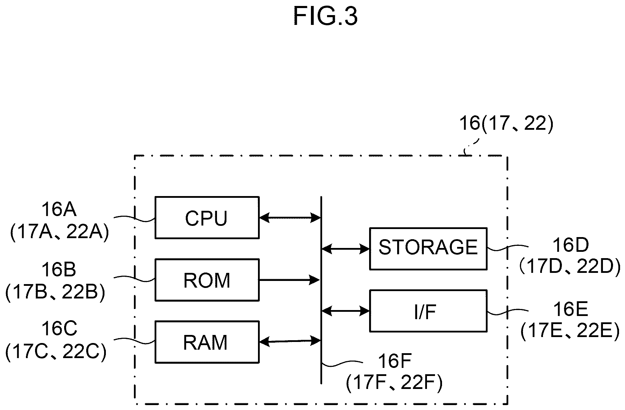

Fig. 3 is a block diagram illustrating relevant configuration of an electrical system of the meter ECU 16, the multimedia ECU 17, and the advanced driver assistance ECU 22 in the onboard device 12 according to the present exemplary embodiment. Note that the meter ECU 16, the multimedia ECU 17, and the advanced driver assistance ECU 22 are basically configured as a general purpose computer, and so description follows regarding the meter ECU 16 as a representative thereof.

The meter ECU 16 is configured by a general purpose microcomputer including a central processing unit (CPU) 16A, read only memory (ROM) 16B, random access memory (RAM) 16C, storage 16D, an interface (I/F) 16E, and a bus 16F.

The CPU 16A is a central processing unit that controls overall device operation by executing various programs. The ROM 16B is pre-stored with various control programs, including a vehicle display program and the like, and various parameters and the like. The RAM 16C is employed as a work area or the like when executing various programs with the CPU 16A. The storage 16D is configured by various storage sections such as a hard disk drive (HDD), solid state drive (SSD), flash memory, or the like, and is stored with various data, application programs, and the like. The I/F 16E is able to connect to the vehicle network 24, and performs exchange of various data with other ECUs connected to the vehicle network 24, such as the meter ECU 16. Each of the above sections of the meter ECU 16 are electrically connected to each other by the bus 16F. Note that although the present exemplary embodiment will be described for the vehicle display program being stored in the ROM 16B, a mode may be adopted in which the vehicle display program is stored on the storage 16D.

In the present exemplary embodiment, a situation awareness (SA) view display (peripheral monitoring display) is able to display a vehicle situation in the vehicle periphery, on at least one out of the display 14 or the multimedia display 15. Peripheral monitoring display enables an occupant to be notified of a situation in the periphery of the ego vehicle by displaying an ego vehicle image depicting the ego vehicle, and by also displaying a target image representing a target (for example, a vehicle such as a leading vehicle) present at the periphery of the ego vehicle as detected by the travel state detection sensor 18 and the peripheral situation monitoring device 20.

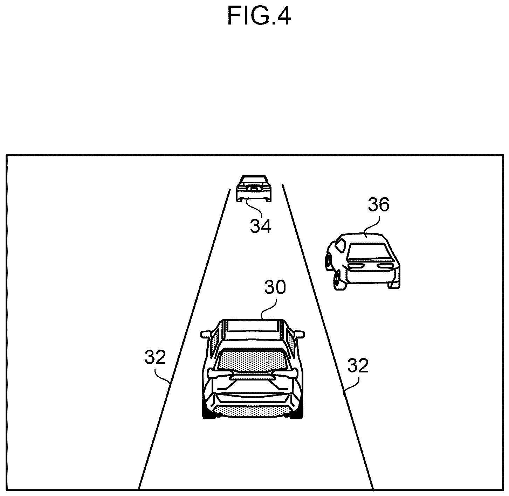

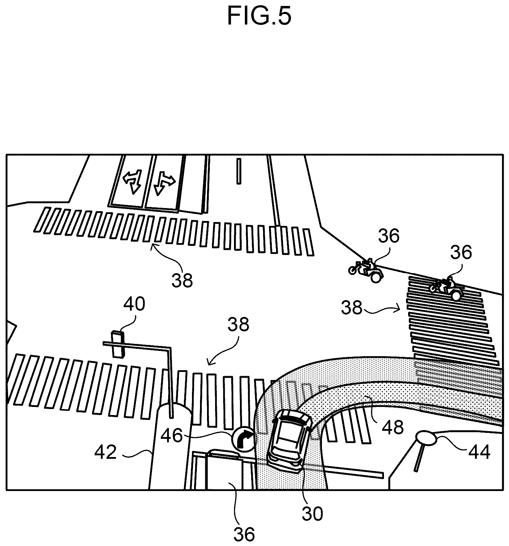

Fig. 4 is a diagram illustrating an example of a peripheral monitoring display, and Fig. 5 is a diagram illustrating another example of a peripheral monitoring display.

An ego vehicle image 30 and a peripheral monitoring image are displayed as an example of a peripheral monitoring display, as illustrated in Fig. 4. As the peripheral monitoring image, a leading vehicle image 34 depicting a leading vehicle of the vehicle 10 and a peripheral vehicle image 36 depicting a vehicle at the periphery of the vehicle 10 are displayed as an example of a target image, together with white lines 32 and the like representing a travel lane. The leading vehicle image 34 and the peripheral vehicle image 36 are, for example, displayed based on information from an ultrasonic sensor, such as a clearance sonar or the like, serving as the peripheral situation monitoring device 20.

Moreover, as another example of a peripheral monitoring display, and as illustrated in Fig. 5, a bird's-eye image including a target image representing targets present at positions may be displayed during actual travel as a peripheral monitoring image, and the ego vehicle image 30 may be displayed in the bird's-eye image. The bird's-eye image may, for example, include display of a pedestrian crossing image 38, and a traffic signal image 40, a central divider image 42, a sign image 44, and a peripheral vehicle image 36 of trucks, cars, two-wheeled vehicles, or the like. The bird's-eye image may, for example, be displayed using information from a radar device or camera serving as the peripheral situation monitoring device 20. The example of the peripheral monitoring display of Fig. 5 illustrates an example displayed at the same time as a guidance display, and illustrates an example in which a guidance image 46 and a guidance lane 48 have been displayed in the bird's-eye image.

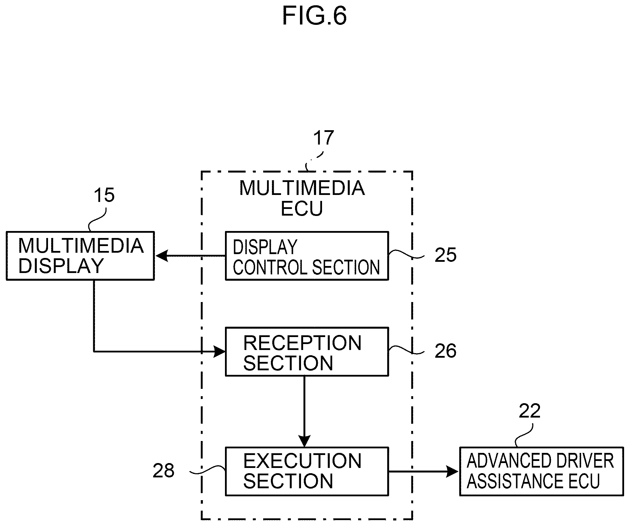

Description follows regarding a functional configuration for performing peripheral monitoring display by functions performed by at least one out of the CPU 16A in the meter ECU 16 or the CPU 17A in the multimedia ECU 17 functioning, so as to execute a program stored on the ROM 16B or the ROM 17B. The functional configurations of the meter ECU 16 and the multimedia ECU 17 are the same, and so description follows regarding the multimedia ECU 17 as a representative thereof. Fig. 6 is a functional block diagram illustrating a functional configuration of the multimedia ECU 17.

As illustrated in Fig. 6, the multimedia ECU 17 functions as a display control section 25, a reception section 26, and an execution section 28 by the CPU 17A executing a program stored on the ROM 17B.

The display control section 25 displays a peripheral monitoring image based on detection results of targets at the periphery of the vehicle 10 detected by the peripheral situation monitoring device 20, together with the ego vehicle image 30, on the multimedia display 15B.

The reception section 26 receives a predetermined operation on the multimedia display 15. For example, the reception section 26 receives a touch operation on the ego vehicle image 30.

The execution section 28 executes predetermined processing related to the functions of the vehicle 10 on each section of the vehicle 10 according to an operation received by the reception section 26. As the predetermined processing in the present exemplary embodiment, the execution section 28 controls the advanced driver assistance ECU 22 and performs processing such as an action or the like of various driver assistance functions.

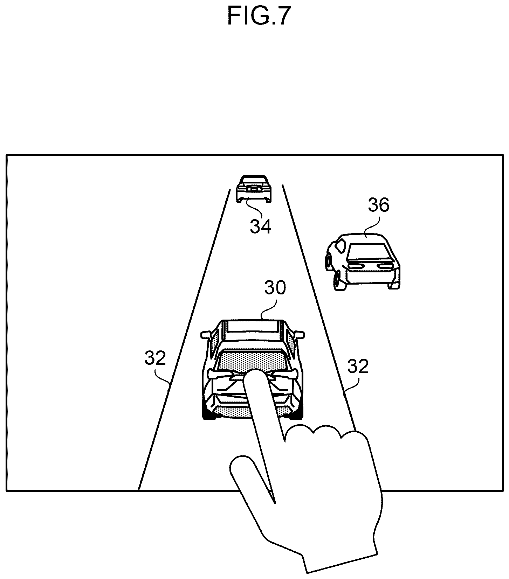

For example as illustrated in Fig. 7, the multimedia ECU 17 may, as the predetermined operation, receive with the reception section 26 a touch operation on the ego vehicle image 30 when the ego vehicle image 30 and the peripheral monitoring image are being displayed on the multimedia display 15 as the peripheral monitoring display.

Then, when the reception section 26 has received the touch operation on the ego vehicle image 30, the execution section 28 controls the advanced driver assistance ECU 22 and operates an adaptive cruise control function as an example of the predetermined processing. Note that Fig. 7 is a diagram to explain an example of the predetermined processing performed by the execution section 28 of the multimedia ECU 17 of the onboard device 12 according to the present exemplary embodiment. Although an example will be described in which the predetermined processing is performed by the multimedia ECU 17, the processing may be performed by the meter ECU 16.

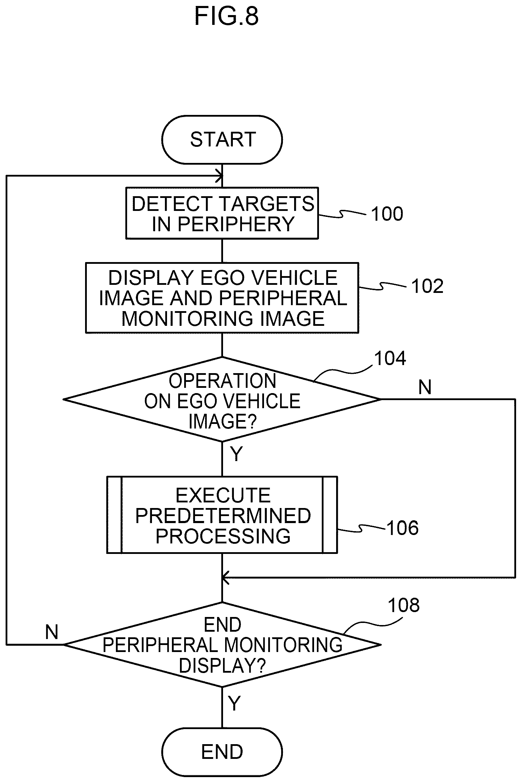

Next description follows regarding processing performed by the multimedia ECU 17 of the onboard device 12 according to the present exemplary embodiment configured as described above. Fig. 8 is a flowchart illustrating an example of a flow of processing performed by the multimedia ECU 17 of the onboard device 12 according to the present exemplary embodiment. Note that the processing of Fig. 8 is, for example, started when a predetermined operation to start peripheral monitoring display has been performed. Moreover, although the processing of Fig. 8 will be described as processing performed by the multimedia ECU 17, the processing may be performed by the meter ECU 16.

At step 100, the CPU 17A detects targets at the periphery, and processing proceeds to step 102. In the present exemplary embodiment, the targets at the periphery are detected by acquiring detection results of the travel state detection sensor 18 and detection results of the peripheral situation monitoring device 20.

At step S102, the CPU 17A displays the ego vehicle image 30 and the peripheral monitoring image on the multimedia display 15, and processing proceeds to step 104. For example, as illustrated in Fig. 4, peripheral monitoring display is performed by displaying the ego vehicle image 30 and, as the peripheral monitoring image, displaying a target image, such as the leading vehicle image 34, the peripheral vehicle image 36, or the like.

At step 104, the CPU 17A determines whether or not an operation has been performed on the ego vehicle image 30. This determination is, for example, determination as to whether or not a touch operation has been performed on the ego vehicle image 30, with processing transitioning to step 108 when determination is negative, and processing transitioning to step 106 when determination is affirmative.

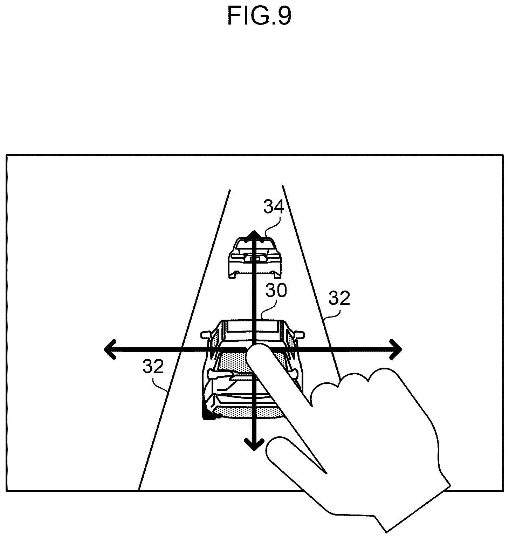

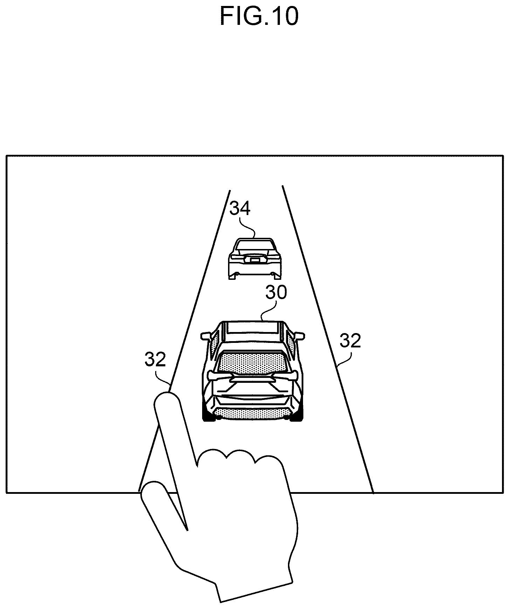

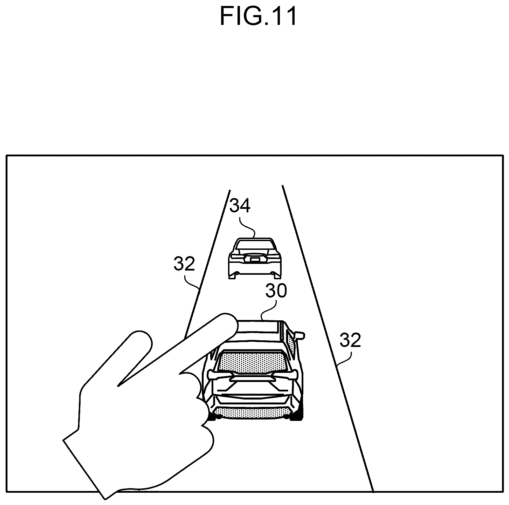

At step 106, the CPU 17A executes the predetermined processing, and then processing proceeds to step 108. The predetermined processing may be to control the advanced driver assistance ECU 22 so as to perform part or all of at least one of a vehicle operation or an operation assistance and execute a driver assistance function or an autonomous driving function, and may be to perform part or all of at least one of a vehicle operation or an operation assistance and change a setting of a driver assistance function or an autonomous driving function. For example, an ON/OFF setting may be changed in an adaptive cruise control function as an example of an autonomous driving function, or may be changed in a lane deviation prevention function that performs lane deviation prevention as an example of a driver assistance functions (for example, a lane departure alert (LDA) function that performs lane departure warning, or a function that not only performs departure warning but also combines this with steering assistance). Alternatively, a lane change assist (LCA) function and an overtaking function may be executed as an example of a lane change assistance function to assist lane changes. Furthermore, as a specific example of the predetermined processing, for example as described above, the advanced driver assistance ECU 22 may be controlled, and ON/OFF of an operation of an adaptive cruise control function may be changed. Note that, in a vehicle or the like capable of autonomous driving, the predetermined processing may be executed according to a slide operation on the ego vehicle image 30, as illustrated in Fig. 9. For example, acceleration may be performed when a slide operation has been received at the ego vehicle image 30 in the progression direction (upward in Fig. 9), or deceleration may be performed when a slide operation has been received thereon in a rearward direction (downward in Fig. 9). This thereby enables an instruction to accelerate/decelerate the vehicle 10 to be performed by an intuitive operation on the peripheral monitoring display. Moreover, operation of a lane change assistance function toward the left may be performed when a slide operation on the ego vehicle image 30 has been received toward the left in Fig. 9, and operation of a lane change assistance function toward the right may be performed when a slide operation toward the right has been received thereon. This thereby enables a lane change assistance function to be executed by an intuitive operation on the peripheral monitoring display. Moreover, as illustrated in Fig. 10, when a touch operation to a lane boundary line such as the white lines 32 has been received as illustrated in Fig. 10, a setting of a lane departure alert function may be changed as the predetermined processing. This thereby enables a setting such as ON/OFF or the like of a lane departure alert function to be changed on the peripheral monitoring display. Moreover, as illustrated in Fig. 11, a setting of an automatic headlight control function may be changed as the predetermined processing when a touch operation has been received to a front end of the ego vehicle image 30. This thereby enables a setting such as ON/OFF on an automatic headlight control function or the like to be changed on the peripheral monitoring display. Note that, as the automatic headlight control function, application may be made to various functions such as a function to automatically switch to high-beam, low-beam, or side lights, a function such that an oncoming vehicle side is not dazzled even in high-beam mode, and/or a function to automatically switch illumination direction of headlights. For example, application may be made to not only switching high-beam ON/OFF, but also to an automatic high-beam function that automatically switches between high-beam, low-beam, and side lights.

At step 108, the CPU 17A determines whether or not to end the peripheral monitoring display. This determination is, for example, determination as to whether or not an instruction to operate another function, such as an air conditioner operation, an audio operation, or the like, has been performed. Processing returns to step 100 when negative determination is made and the above processing is repeated, and when affirmative determination this cycle of processing is ended and performing the instructed function is started.

Performing processing in this manner may enable an operation on a function of the ego vehicle, such as a driver assistance function, to be executed by operation on a peripheral monitoring display, enabling convenience to be improved.

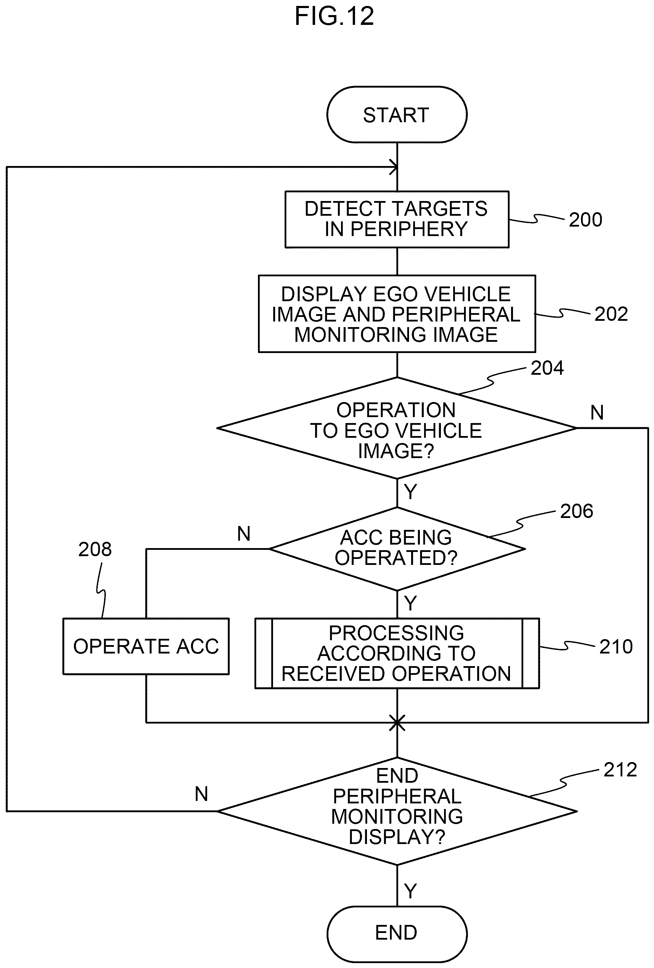

Next, description follows regarding processing of a modified example performed in the multimedia ECU 17 of the onboard device 12 according to the present exemplary embodiment. Fig. 12 is a flowchart illustrating an example of a flow of a modified example of processing performed by the multimedia ECU 17 of the onboard device 12 according to the present exemplary embodiment. Note that the processing of Fig. 12 is, for example, started when a predetermined operation to start peripheral monitoring display has been performed.

At step 200, the CPU 17A detects for targets at the periphery and processing proceeds to step 202. In the present exemplary embodiment, targets are detected at the periphery by acquiring detection results of the travel state detection sensor 18, and detection results of the peripheral situation monitoring device 20.

At step 202, the CPU 17A displays the ego vehicle image 30 and a peripheral monitoring image on the multimedia display 15, and processing proceeds to step 204. For example as illustrated in Fig. 4, peripheral monitoring display is performed by displaying the ego vehicle image 30 and, as the peripheral monitoring image, by displaying the leading vehicle image 34 and a target image of the peripheral vehicle image 36, and the like.

At step 204, the CPU 17A determines whether or not an operation has been performed on the ego vehicle image 30. This determination is, for example, determination as to whether or not a touch operation has been performed on the ego vehicle image 30, and processing proceeds to step 212 when determination is negative, and processing proceeds to step 206 when determination is affirmative.

At step 206, the CPU 17A determines whether or not adaptive cruise control (ACC) is being operated. Processing proceeds to step 208 when determination is negative, and processing proceeds to step 210 when determination is affirmative.

At step 208, the CPU 17A operates adaptive cruise control (ACC), and processing proceeds to step 212.

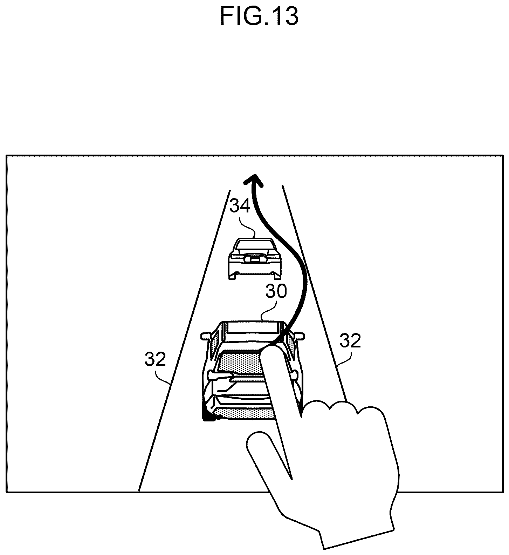

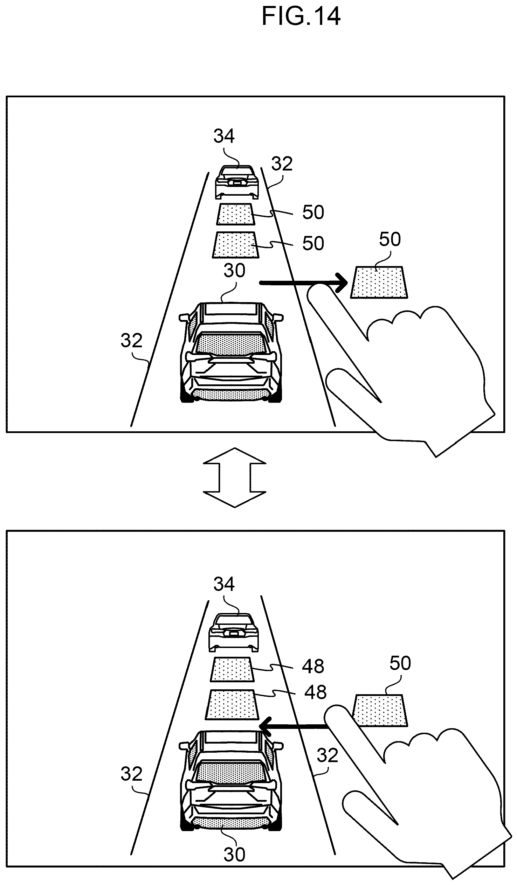

At step 210, the CPU 17A performs processing according to the operation received, then processing proceeds to step 212. Such processing according to the operation received is, for example, controlling the advanced driver assistance ECU 22, when a slide operation has been received to the ego vehicle image 30 or the leading vehicle image 34 in the height direction of Fig. 9, so as to perform processing to adjust an inter-vehicle distance according to a direction of a slide operation. This thereby enables an inter-vehicle distance to be specified during operation of an adaptive cruise control function. Alternatively, when a slide operation has been received to the ego vehicle image 30 in the left or right directions of Fig. 9, the advanced driver assistance ECU 22 is controlled so as to control lane change in a direction according to the slide direction. This thereby enables a lane change assistance function to be executed by an intuitive operation on the peripheral monitoring display. Alternatively, as illustrated in Fig. 13, the advanced driver assistance ECU 22 is controlled so as to control overtaking of the leading vehicle when a slide operation of a trajectory to overtake of the leading vehicle image 34 has been received at the ego vehicle image 30. This thereby enables overtaking of a leading vehicle to be instructed by an intuitive operation on the peripheral monitoring display. Alternatively, as illustrated in Fig. 14, processing to adjust an inter-vehicle distance is performed according to the direction of a slide operation, when a slide operation has been received at an inter-vehicle spacing image 50, representing an inter-vehicle spacing between the vehicle 10 and the leading vehicle. Specifically, as illustrated at the top of Fig. 14, the inter-vehicle distance is adjusted to a shorter inter-vehicle distance when a slide operation moving from in front of the ego vehicle image 30 toward the side has been received at the inter-vehicle spacing image 50. Alternatively, as illustrated at the bottom of Fig. 14, the inter-vehicle distance may be adjusted so as to be a longer inter-vehicle distance when a slide operation moving the inter-vehicle spacing image 50 to in front of the ego vehicle image 30 has been received. This thereby enables the inter-vehicle distance to be specified on the peripheral monitoring display during operation of an adaptive cruise control function.

At step 212, the CPU 17A determines whether or not to end the peripheral monitoring display. This determination is, for example, determination as to whether or not an instruction to operate another function, such as an air conditioner operation, an audio operation, or the like, has been performed. Processing returns to step 200 when this determination is negative and the above processing is repeated, and one cycle of processing is ended when determination is affirmative and processing to perform the instructed function is started.

The modified example in this manner may also enable a function of the ego vehicle such as a driver assistance function or the like to be executed by operation on a peripheral monitoring display, enabling convenience to be improved.

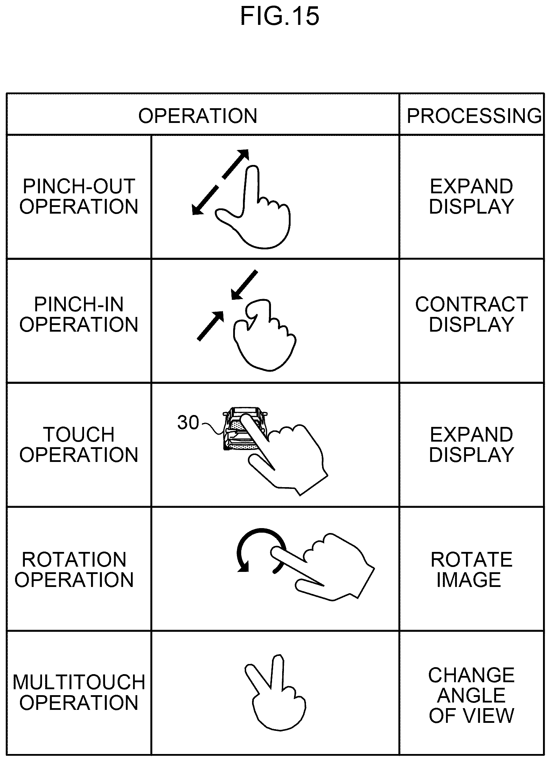

Next, description follows regarding an example of processing corresponding to an operation when another operation has been received at the peripheral monitoring display in the onboard device 12 according to the present exemplary embodiment. Fig. 15 is a diagram illustrating other examples of operations received at the peripheral monitoring display in the onboard device 12 according to the present exemplary embodiment, and examples of processing corresponding the other operations.

When a pinch operation of a touch operation like two fingers pinching has been received at the peripheral monitoring display, the image being displayed may be displayed enlarged or contracted according to this pinch operation. For example, when a pinch-out operation of a touch operation in which two fingers move in a spreading direction has been received at the peripheral monitoring display, as illustrated in Fig. 15, display of the image being displayed may be enlarged according to a movement amount of the two fingers. This thereby enables an operation to enlarge an area to be executed by an intuitive operation on the peripheral monitoring display, improving operability. Alternatively, when a pinch-in operation of a touch operation in which two fingers move in an approaching direction has been received at the peripheral monitoring display, as illustrated in Fig. 15, display of the image being displayed may be contracted according to a movement amount of the two fingers. This thereby enables an operation to contract an area to be executed by an intuitive operation on the peripheral monitoring display, improving operability. Moreover, such enlarging or contracting by a pinch operation may be enlarging or contracting about the ego vehicle image 30 as the center, or may be enlarging or contracting with a ground point where the fingers are detected as the center.

Moreover, as illustrated in Fig. 15, the image being displayed on the peripheral monitoring display may be displayed enlarged about the ego vehicle image 30 as the center when there a touch operation has been received once on the ego vehicle image 30, or when a prolonged touch operation of at least a predetermined time or a double tap (a touch operation twice within a predetermined period of time) has been received on the ego vehicle image 30. This thereby enables an operation to enlarge display to be performed easily on the peripheral monitoring display. Alternatively, when a touch operation to the ego vehicle image 30 has been received at the peripheral monitoring display, this may be interpreted as receiving a menu display instruction, and a predetermined menu screen displayed. This thereby enables a menu screen to be displayed from the peripheral monitoring display, improving operability.

Moreover, when a touch operation of a finger rotation has been received at the peripheral monitoring display, as illustrated in Fig. 15, the ego vehicle image 30 and the peripheral monitoring image display being displayed may be displayed rotated in the direction of finger rotation, as if being able to see 360° around. This thereby enables an instruction to rotate the image being displayed on the peripheral monitoring display to be performed easily, improving operability.

Moreover, an angle of view of the image being displayed may be changed when a touch operation has been received at plural locations by two fingers or the like (a multitouch operation) on the peripheral monitoring display, as illustrated in Fig. 15. For example, the angle of view of an image may be changed and displayed in a direction corresponding to a slide direction when a touch operation of two fingers sliding in the height direction has been received. The change in angle of view may, for example, be by displaying the ego vehicle image 30 and the peripheral monitoring image changed to an angle of view looking down on the ego vehicle image 30. Or the display range of the peripheral monitoring image being displayed may be changed. This thereby may enable the angle of view of an image being displayed on the peripheral monitoring display to be changed easily, improving operability.

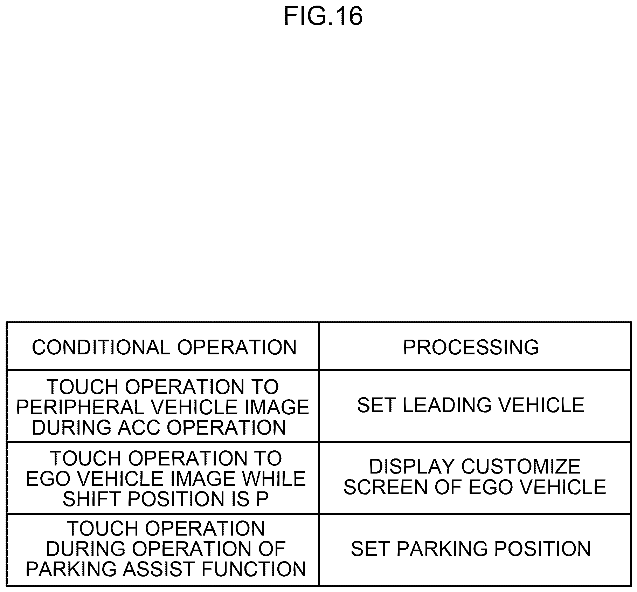

Furthermore, description follows regarding examples of conditional operations received at the peripheral monitoring display, and examples of processing according to the operation. Fig. 16 is a diagram illustrating examples of conditional operations received at the peripheral monitoring display in the onboard device 12 according to the present exemplary embodiment, and examples of processing according to the operations.

For example, when a touch operation to the peripheral vehicle image 36 on the peripheral monitoring display has been received during adaptive cruise control (ACC) operation, as illustrated in Fig. 16, the peripheral vehicle corresponding to the touch operation may be set as the leading vehicle for the vehicle 10 to follow in an adaptive cruise control function. For example, a leading vehicle may be set by transmitting an instruction to set a peripheral vehicle corresponding to the touch operation as the leading vehicle from the meter ECU 16 or the multimedia ECU 17 to the advanced driver assistance ECU 22. This thereby enables the leading vehicle for the vehicle 10 to follow in the adaptive cruise control function to be set on the peripheral monitoring display, improving operability.

Moreover, when a touch operation to the ego vehicle image 30 has been received at the peripheral monitoring display while the shift position is in the parking position (P), a customize screen to customize a predetermined function of the vehicle may be displayed, as illustrated in Fig. 16. For example, a customize screen is displayed to set, for example, content to be displayed on the display 14 or the multimedia display 15. This thereby enables transition to the customize screen to be instructed on the peripheral monitoring display, improving operability.

Moreover, in cases in which a touch operation has been received at the peripheral monitoring display during operation of a parking assist function, as illustrated in Fig. 16, the touch position corresponding the touch operation received may be set as a parking position of the vehicle 10 in the parking assist function. For example, setting of a parking position is performed by transmitting information specifying the touch position corresponding to the touch operation as the parking position from the meter ECU 16 or the multimedia ECU 17 to the advanced driver assistance ECU 22. This thereby enables specification on the peripheral monitoring display of the parking position of the vehicle 10 in a parking assist function, improving operability. Note that the parking assist function may be applied to autonomous driving to park in a parking box when in a vicinity of the parking box, and may be applied to an auto-valet parking function to perform automatic parking in a specified space when performing autonomous driving in a carpark.

Note that although in the exemplary embodiment described above an example has been described in which the peripheral monitoring display is displayable on at least one out of the display 14 or the multimedia display 15, there is no limitation thereto. For example, the peripheral monitoring display may be performed on a head-up display (HUD), and an operation received at the peripheral monitoring display.

Moreover, although in the exemplary embodiment described above the meter ECU 16A controls the display 14, and the multimedia ECU 17 controls the multimedia display 15, there is no limitation thereto. For example, a mode may be adopted in which a single ECU controls the display 14 and the multimedia display 15.

Moreover, although the processing performed by the multimedia ECU 17 of each of the above exemplary embodiments has been described for software processing performed by executing a program, there is no limitation thereto. For example, the processing may be performed by hardware, such as a graphics processing unit (GPU), application specific integrated circuit (ASIC), field programmable gate array (FPGA), or the like.
Alternatively, the processing may be performed by a combination of software and hardware. Moreover, a program may be stored on various storage media for distribution software processing.

Furthermore, the present disclosure is not limited by the above, and obviously various modifications may be implemented other than the above within a range not departing from the spirit of the present disclosure.

## Claims

1. An onboard device (12), comprising:
a display control section (25) configured to, based on a detection result of a detection section (20) for detecting targets at a periphery of a vehicle (10), display an ego vehicle image (30) depicting the vehicle (10) together with a peripheral monitoring image on a display (14, 15) provided to the vehicle;
a reception section (26) configured to receive an operation of an occupant of the vehicle (10) on the display (14, 15); and
an execution section (28) configured to execute a predetermined processing related to a function of the vehicle (10) at each section of the vehicle according to the operation received by the reception section (26).

2. The onboard device (12) of claim 1, wherein as the predetermined processing, the execution section (28) executes a driver assistance function or an autonomous driving function that performs part or all of at least one out of a vehicle operation or an operation assist.

3. The onboard device (12) of claim 1 or 2, wherein, as the predetermined processing, the execution section (28) changes a setting of a driver assistance function or an autonomous driving function that performs part or all of at least one out of a vehicle operation or an operation assist.

4. The onboard device (12) of any of claims 1 to 3, wherein, as the predetermined processing, the execution section (28) changes a setting of a leading vehicle following function, when a touch operation to the ego vehicle image (30) has been received by the reception section (26).

5. The onboard device (12) of any of claims 1 to 4, wherein, as the predetermined processing, the execution section (28) executes control of acceleration or deceleration of the vehicle (10), when a slide operation of the ego vehicle image (30) has been received by the reception section (26) in a progression direction or a rearward direction.

6. The onboard device (12) of any of claims 1 to 5, wherein, as the predetermined processing, the execution section (28) executes a lane change assistance function in a right direction or a left direction, when a slide operation of the ego vehicle image (30) has been received by the reception section (26) in a right direction or a left direction.

7. The onboard device (12) of any of claims 1 to 6, wherein, as the predetermined processing, the execution section (28) changes a setting of a lane deviation prevention function, when a touch operation to an image of a vehicle lane boundary line has been received by the reception section (26).

8. The onboard device (12) of any of claims 1 to 7, wherein, as the predetermined processing, the execution section (28) changes a setting of an automatic headlight control function, when a touch operation to a front end of the ego vehicle image (30) has been received by the reception section (26).

9. The onboard device (12) of any of claims 1 to 8, wherein, as the predetermined processing, the execution section (28) adjusts an inter-vehicle distance when, during operation of a leading vehicle following function, a slide operation to the ego vehicle image (30) or to a leading vehicle image (34) depicting a leading vehicle in front of the vehicle (10), or a slide operation to an inter-vehicle spacing image (50) to represent an inter-vehicle distance between the vehicle and the leading vehicle, has been received by the reception section (26).

10. The onboard device (12) of any of claims 1 to 9, wherein, as the predetermined processing, the execution section (28) executes overtaking of a leading vehicle, when a slide operation of a trajectory to overtake a leading vehicle image (34) depicting a leading vehicle in front of the vehicle has been received by the reception section (26).

11. The onboard device (12) of any of claims 1 to 10, wherein, as the predetermined processing, the execution section (28) performs enlargement or contraction on an image being displayed on the display according to a pinch operation to the display, when the pinch operation has been received by the reception section (26).

12. The onboard device (12) of any of claims 1 to 11, wherein, as the predetermined processing, the execution section (28) enlarges display of an image being displayed on the display (14, 15), when the reception section (26) has received a touch operation once to the ego vehicle image (30), or a touch operation of at least a predetermined duration or a touch operation twice within a predetermined period of time to the display (14, 15).

13. The onboard device (12) of any of claims 1 to 12, wherein, as the predetermined processing, the execution section (28) rotates the peripheral monitoring image being displayed on the display (14, 15), when a touch operation of rotation on the display (14, 15) has been received by the reception section (26).

14. The onboard device (12) of any of claims 1 to 13, wherein, as the predetermined processing, the execution section (28) changes an angle of view of an image displayed on the display (14, 15), when a touch operation at a plurality of locations on the display (14, 15) has been received by the reception section.

15. The onboard device (12) of any of claims 1 to 14, wherein, when the reception section (26) has received a touch operation to a peripheral vehicle image (34) representing a vehicle at the periphery of the vehicle during operation of a leading vehicle following function, as the predetermined processing, the execution section (28) sets the peripheral vehicle corresponding to the touch operation as a leading vehicle for the vehicle (10) to follow.

16. The onboard device (12) of any of claims 1 to 15, wherein, when a touch operation to the ego vehicle image (30) has been received while a shift position of the vehicle (10) is in a parking position, as the predetermined processing, the execution section (28) displays a customize screen to customize a predetermined function of the vehicle (10).

17. The onboard device (12) of any of claims 1 to 16, wherein, when the reception section (26) has received a touch operation to the display (14, 15) during operation of a parking assist function of the vehicle (10), as the predetermined processing, the execution section (28) sets a position corresponding to the touch operation as a parking position of the vehicle (10) in the parking assist function.

18. A computer-readable medium storing an onboard control program that causes a computer (16, 17) to execute processing, the processing comprising:
based on a detection result of a detection section for detecting targets at a periphery of a vehicle (10), displaying an ego vehicle image (30) depicting the vehicle (10) together with a peripheral monitoring image on a display (14, 15) provided to the vehicle (10);
receiving an operation of an occupant of the vehicle (10) on the display (14, 15); and
executing a predetermined processing related to a function of the vehicle (10) at each section of the vehicle according to the received operation.
